# EUROPEAN PATENT SPECIFICATION

(11) **EP 0 890 272 B1**
(45) Date of publication and mention of the grant of the patent: **28.03.2007**
(21) Application number: 97946773.5
(22) Date of filing: 02.12.1997
(51) Int. Cl.: H04Q 7/20

(54) **USE OF A MOBILE STATION AS A CORDLESS TELEPHONE**
GEBRAUCH EINER MOBILSTATION ALS SCHNURLOSES TELEFON
UTILISATION D'UNE STATION MOBILE COMME TELEPHONE SANS FIL

(30) Priority: 05.12.1996 FI 964876
(43) Date of publication of application: 13.01.1999
(73) Proprietor: Nokia Corporation, 02150 Espoo (FI)
(72) Inventor: HOKKANEN, Petri, FIN-40270 Palokka (FI)
(74) Representative: Ruuskanen, Juha-Pekka
(86) International application number: PCT/FI1997/000746
(87) International publication number: WO 1998/028929

(56) References cited:
- EP-A- 0 740 482
- WO-A-95/01070
- WO-A-95/24106
- GB-A- 2 225 512
- GB-A- 2 285 556

## Description

### Field of the invention

This invention concerns a cellular system comprising base stations and mobile stations with an interface in between which is a radio interface.

### Background of the invention

In a fixed wireline network the calling subscriber knows the grounds for charging of the call even when dialling the number of subscriber B, because debiting will depend on whether the call is a local call, a long distance call, a mobile call or a call to a foreign country. The terminal equipment used by subscriber A also affects debiting, since mobile originated calls are more expensive than calls originated from a fixed network, irrespectively of the target terminal equipment. This can be seen as the price which the subscriber will have to pay for his great freedom of movement.

The ordinary home user has long been offered cordless phones providing a limited mobility. The arrangement comprises a base station at the subscriber line end which converts the audio signal arriving from the fixed network into a radio signal and transmits it further to the cordless phone. The most usual modulation used so far is FM modulation. The major drawback of this kind of modulation is that traffic in the radio path be listened to illegally by any FM receiver tuned to a suitable frequency. An essential improvement on this is to use digital modulation and transfer of speech ciphered over the radio path. A suitable and already standardized digital system is the DECT system (Digital European Cordless Telecommunications), and cordless phones complying with the specification of this system and intended for home users are in fact already available - see also WO-A-95 24106.

A great disadvantage of the cordless phone is the limitation of the allowed mobility to a radius of 50-100 m from the base station , but an advantage is the cheaper prices of the fixed network compared with e.g. the mobile network. Another great disadvantage is low security especially when using the traditional analog system.

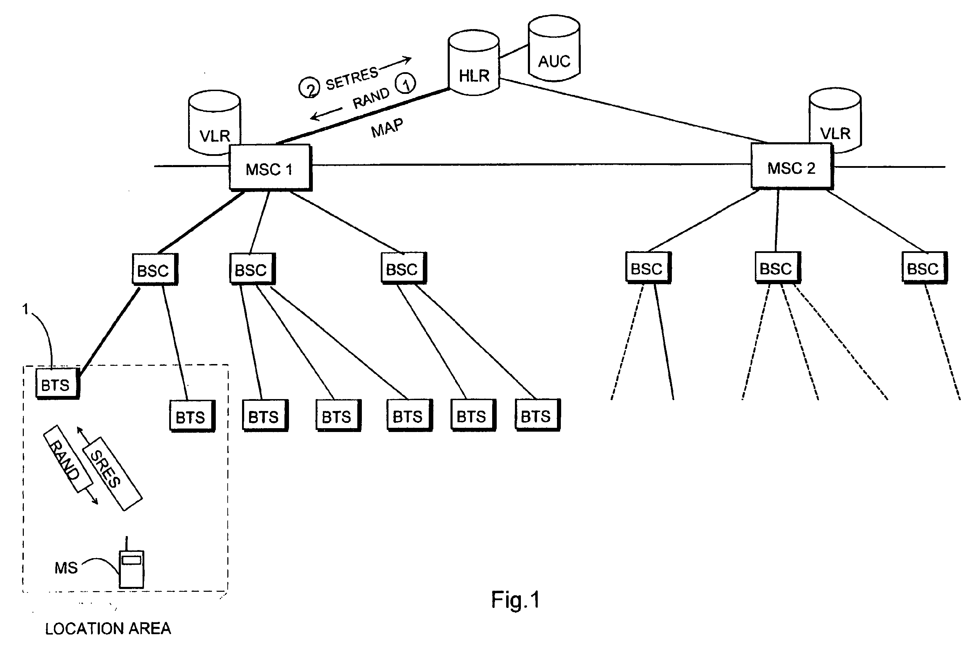

The grounds for charging of the call used in a fixed network may not be used as such in mobile networks allowing great mobility due to the network structure and manner of operation. In the following the structure and operation of the mobile network will be explained using the known GSM mobile network shown in Figure 1 as an example. Communication between the MS (Mobile Station) in a cell and the network takes place through the radio via the base station BTS (Base Transceiver Station). Base stations BTS are connected to the BSC (Base Station Controller), with e.g. radio channel management and channel exchange functions as its duties. Several base station controllers are connected to one MSC (Mobile Switching Center) performing the major switching functions of the mobile network and connecting the mobile network with other mobile switching centers and with external networks.

The mobile network also comprises various databases, such as an HLR (Home Location Register), where subscriber information is stored permanently. The subscriber's MSISDN number, the IMSI (International Mobile Subscriber Identity) used within the network and subscriber service information are stored in the home location register as well as routing information to the VLR (Visitor Location Register). The AuC (Authentication Center) is also located in connection with the home location register. Subscriber information received from HLR is stored in VLR for the time it takes for the visitor to stay in the VLR area.

When doing location updating for the first time, the network will check whether the user has right to access to the network. The purpose of the security functions of the GSM system is to prevent unauthorized access to the network, thus preventing anyone from using the network for somebody else's account and to protect the user's privacy. Unauthorized access is prevented through authentication, where the user is identified to make sure that the subscriber is entitled to use the network. In fact, the MS is formed of two parts: the ME (Mobile Equipment) and the SIMcard (Subscriber Identity Module), so an operating mobile station MS is formed only by pushing the SIM card into the mobile equipment ME. The identification by having the user push his SIM card into his mobile station MS is intended to prevent unauthorized use of e.g. stolen equipment and to make sure that only those subscribers use the network who pay their bills. From the operator's point of view, identification is especially important particularly in connection with international roaming, since the network does not know the visitor's subscriber information and is thus unaware of any insolvency.

Firstly, the user identifier or PIN code (Personal Identity Number) given by the user himself and stored on the SIM card is used in identification. In the first stage, when electric power is turned on to the phone, the phone will ask the user to push a code of 4-8 digits and will compare the entered code with a code stored in the memory. If the code is incorrect after three attempts, the card will go into a locked state and it can not be opened without special measures. This identification is done entirely locally by the SIM card, so no PIN code is transmitted by radio and the code can thus not be captured.

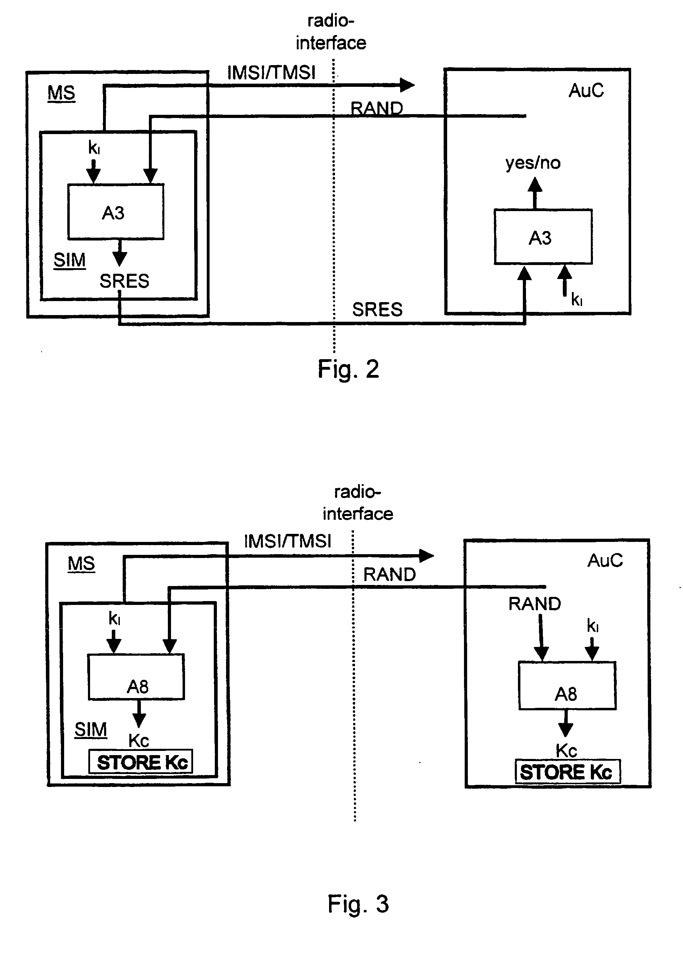

Secondly, after the correct PIN code has been entered, the mobile station will transmit its IMSI number to the network or, if possible, a TMSI (Temporary Mobile Subscriber Identity), whereupon authentication between network and card will take place, which will be explained by referring to Figures 1 and 2.

The principle is such that the network will put a question to the mobile station to which only the right SIM card will know the answer. In the fixed part of the network, identification is performed by the AuC (Authentication Center) located in connection with the home location register HLR while the SIM card performs identification in the terminal equipment. Identification is based on identification algorithm A3 and on subscriber-based identification key Kᵢ. The IMSI (International Mobile Subscriber Identity), the subscriber-specific key Kᵢ and the identification algorithm A3 mentioned above are stored both in the network and in the SIM card.

Figures 1 and 2 are referred to in the following. In the early part of identification, the authentication center AuC will send a question to the mobile station, which is a random number RAND having a length of 128 bits. Thus, its value is in a range of 2¹²⁸-1, so there is a very small chance that the same random number could be used twice. This stage is represented in Figure 1 by circled figure one and in Figure 2 by an arrow passing through the radio interface. The mobile station receives RAND, transfers it to the SIM card, which performs the A3 algorithm with its aid and with the aid of the subscriber-specific key Kᵢ located in the card. The resulting answer is a 32-bit SRES (Signed Response) which the mobile station sends to the network. Authentication center AuC receives it, the circled figure two in Figure 1, and compares the SRES value with the value which it has calculated itself using the same A3 algorithm as well as RAND and key Kᵢ. If the SRESs are the same, the identification is accepted, otherwise the subscriber will not be permitted access to the network (the yes/no stage in Figure 2).

Figure 3 illustrates how the mobile station uses received RAND and Kᵢ values also for the A8 algorithm, which produces a connection-specific ciphering key Kc, which is used further as a key for a third algorithm A5, which is used for ciphering speech and data on radio traffic channels. In the network the AuC performs the same algorithm with the same values and thus obtains the same ciphering key as result. Both store the key in memory.

Since the identification information is always calculated in the home network, operators may use different A3 and A8 algorithms and they will not know what algorithms the other uses. On the other hand, the speech ciphering algorithm A5 must be the same in all networks.

Thus, of all the information contained in the SIM card, the IMSI, Kᵢ and algorithms A3 and A8 are important to identification. Algorithms A3 and A8 are performed in the SIM card so that key Kᵢ need never be transmitted between the card and the mobile equipment ME proper.

As was said above, calculation of the identification data always takes place in the AuC of the subscriber's home network. This being the case, when the subscriber is in another network identification would immoderately load the signal network between VLR and AuC. To avoid this, AuC generally sends ready triplets to the visitor location register VLR while the visitor is registering into this. The triplet contains the RAND, SRES and Kc. Hereby, the visitor location register will check whether the mobile station has calculated correct values, so that signalling to the AuC may be reduced.

It is realized from the above presentation that in terms of security the digital cellular system is very advanced as regards unauthorized use and speech ciphering. Since all cells are of equal value for the mobile network, no other grounds for calculation of the price of calls can be offered than e.g. flexing based on the hours of the day and night and cheaper than normal prices between mobile station and home phone. No special charging grounds can be offered for a call originated from or terminated in a certain cell. These factors reduce the use of the mobile phone as a home phone.

It has been suggested in the field to arrange at home or in any other place desired by the subscriber a special HBS (Home Base Station) which can be connected to an ordinary telephone connection and which is as simple a device as possible serving only one or just a few users registered with the base station, who use a normal phone in a cellular network. As regards its functions the home base station would thus correspond to present base stations for cordless phones, that is, it performs a conversion between the wireline network and the radio interface. Even if the base station would be in the nature of a "stripped" base station in a cellular network, it would be necessary in one way or another to authenticate a cellular network phone desiring access to the network through the base station. The phone does in fact always work in the same manner in authentication and expects to receive a RAND inquiry from the network. At least two ways have been proposed.

Firstly, a modem connection could be arranged from the home base station to the authentication center AuC of the cellular network, whereby parameters to be exchanged in authentication are transferred through this connection and authentication proper would take place in a normal manner as shown in Figure 2. Since signalling would pass through another network than the network of the cellular network operator, an agreement on the matter must be made with the operator in question.

Secondly, a card reader could be located in the home base station and a special card could be used containing data relating to this base station and user. Hereby authentication would be performed between card and base station, so the user would activate the base station with his card.

Drawbacks of these proposed procedures are difficult modem signalling over a fixed network (e.g. PSTN) and acquisition of extra cards and readers as well as the making of related software.

The present invention thus aims at bringing about a cordless telephone system which is based on a cellular network and which does not have the presented drawbacks and wherein standard terminal equipment of the cellular network may be used at home as cordless phones without any special steps required of the user, which thus allows cheaper calls.

The objectives are achieved with the attributes presented in the independent claims.

### Brief summary of the invention

The proposed home base station which is connected to an ordinary telephone connection contains in the manner of a base station for known cordless phones a charging device where the phone can be charged. Besides the pins supplying the charging current, it has special communication pins through which the phone and the base station can exchange authentication information while the phone is in the charger. The turning of the cellular network phone into a cordless phone thus begins by placing the phone in the charger.

In authentication all information transfer takes place only between base station and phone while the authentication center AuC of the cellular network is entirely outside. Hereby, since there is a wireline connection between the home base station and the phone, it does not matter which party's authentication means will generate the authentication and ciphering data as long as these are agreed upon in advance. Even the algorithms need not be such which are used in the cellular system. It is enough to agree in advance that when one party sends a certain inquiry, the other party will respond with a certain answer, whereupon both will use an agreed ciphering key in the radio traffic. The authentication is invisible to the user.

According to an advantageous embodiment, the parameters used in authentication are generated by first means located in the mobile station and the parameters are transferred through a fixed connection to second means which are located in the home base station and which will store them. This makes the base station simpler. In addition, it is advantageous to use the same inquiries, responses, algorithms and ciphering keys as in the cellular system with which the phone in question complies. Hereby any software changes to be made in the phone will be minor changes.

According to another embodiment, the parameters used in authentication are generated by second means in the base station and the parameters are transferred through a fixed connection to such first means in the mobile station which will store them.

It is advantageous when placing the phone in the charger that deregistration of the phone from the cellular network will start at the same time. Hereby any transfer of a call to the home phone will work normally, should the mobile station not answer. Information from the cellular network time may be left in the phone memory, whereby it may be put into use when the phone moves over to the cellular network. Such putting into use may take place automatically, when the phone moves outside the range of the home base station.

When the mobile station has turned into a cordless phone, authentication is performed in the beginning of the call formation using parameters which have been calculated in advance and stored in the memory.

### List of figures

The invention will be explained in greater detail referring to the appended schematic figures, wherein
- Figure 1: shows the principle of a cellular system;
- Figure 2: shows authentication in a known cellular system;
- Figure 3: shows formation of a ciphering key in a known system;
- Figure 4: shows the principle of a system according to the invention;
- Figure 5: illustrates registration in a system according to the invention;
- Figure 6: illustrates authentication in a system according to the invention;
- Figure 7: depicts another embodiment; and
- Figure 8: shows authentication in the other embodiment.

### Detailed description of the invention

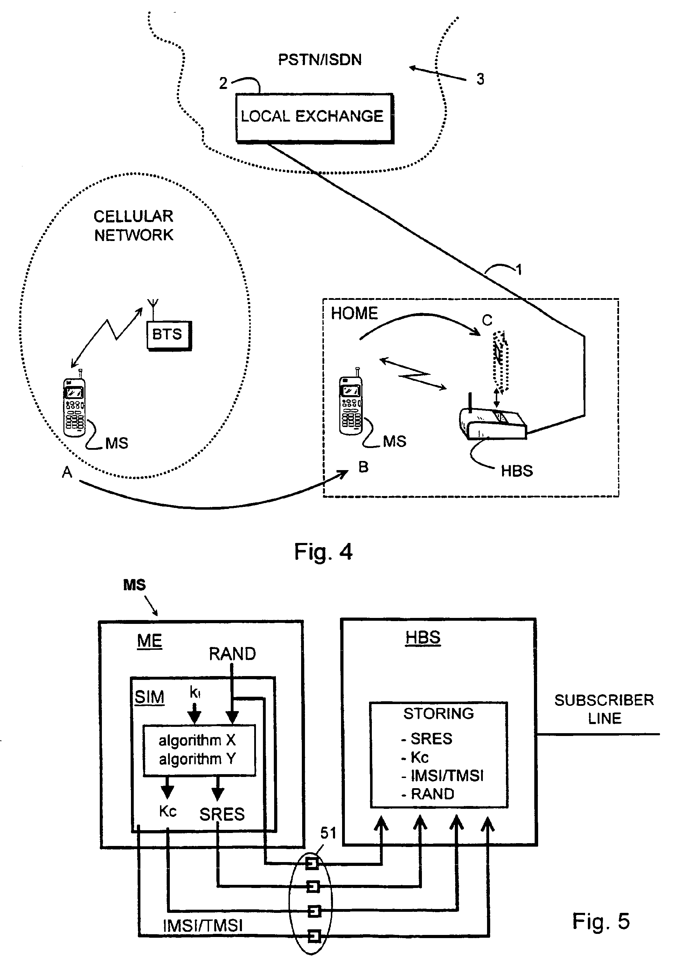

Figure 4 shows basic elements of the system. A subscriber line 1 comes to the subscriber's home, office or any other such place from the local exchange of a fixed PSTN or ISDN network 3. Subscriber line 1 is connected to a HBS (Home Base Station), which will convert speech and data arriving from the subscriber line into the format of the air interface of the cellular system and will send it further to radio communication and will correspondingly convert speech and data arriving in cellular system form from radio communication into the form used in the fixed network, in the case of a PSTN network into an audio signal and in the case of an ISDN network into a PCM signal. The transmission power is low to minimize the interference caused by frequencies used in the home base station, so the cell radius is of the same magnitude as with cordless phones, a few hundred meters in free space.

On the other hand, basic elements comprise a mobile station MS which is a device in accordance with some digital cellular system. The known GSM system is used as example.

When moving within the area of the cellular system, the mobile station is in connection with the base station providing the best connection at each time and it will traffic in a normal manner in the cellular network. When the user moves in the cellular network from place A to his home in place B, which move is shown by an arrow, the mobile station MS will still remain registered with the cellular network. Only when the user connects his phone with a wireline connection directly to the home base station, arrow A -> C, will deregistration of the phone from the cellular network take place. The charging station for phone batteries in the home base station, represented by a depression in home base station HBS, may contain, besides charging current pins, one or more contact pins, whereby when the phone is placed in the charging station the contact pin will be brought into contact with a corresponding pin in the phone, which will start both deregistration of the phone from the cellular network and registration with the home base station.

According to a first embodiment, all calculation relating to authentication is performed in mobile station MS. This embodiment will be explained referring to Figure 5.

Registration with the home base station takes place so that the subscriber equipment ME generates a random number RAND, which it feeds to the SIM card. The SIM card calculates an algorithm X using the random number and key Kᵢ obtaining SRES as result. Using the same values but algorithm Y the SIM card performs algorithm Y obtaining a connection-specific ciphering key Kc as result. These algorithms may be the same as those used in the cellular system, that is, in case of a GSM system algorithms A3 and A8, but they may as well be any algorithms. The SIM card will also give the IMSI (International Mobile Subscriber Identity) or the TMSI (Temporary Mobile Subscriber Identity), which may be any accepted value. In its main features the function corresponds to the left side of Figures 2 and 3, except that ME instead of the authentication center AuC will generate the random number RAND.

The SIM card will feed the response SRES which it has generated, the key Kc and the IMSI/TMSI value to subscriber equipment ME, which will transmit them along a fixed connection through contacts pins 51, which connect the mobile station and the home base station HBS, to home base station HBS, which will store the data it received. Registration has now taken place and the home base station knows the authentication and ciphering parameters which are used. The mobile station MS has turned into a cordless phone, it may be removed from the home base station HBS and it may start or receive a fixed network call. Its phone number is the number given by the fixed network operator to this subscriber connection.

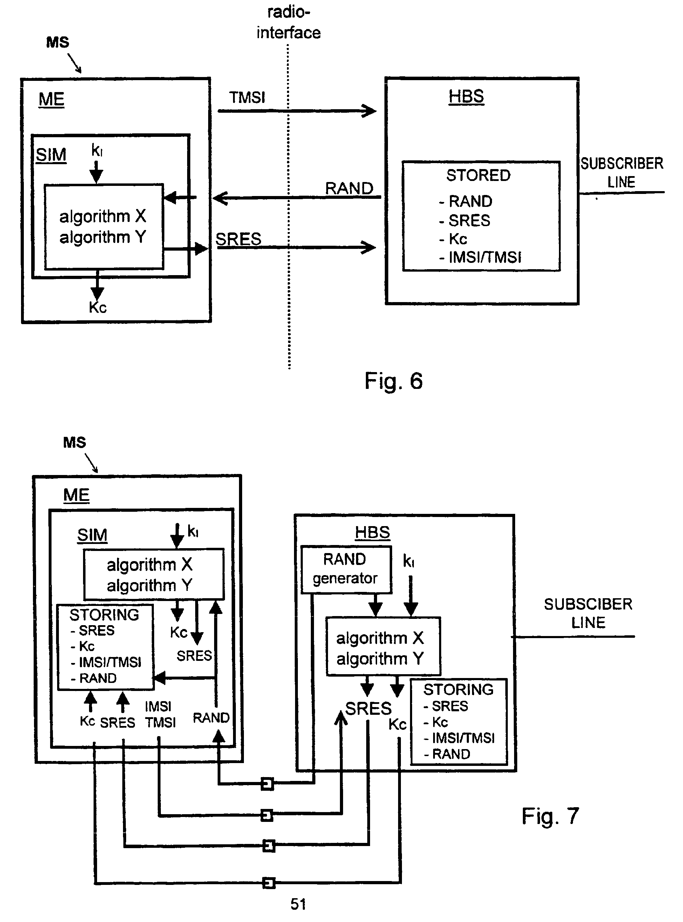

When starting or receiving a call, the first step to perform is authentication, which is explained referring to Figure 6. First, the mobile station MS sends to the home base station HBS by radio its identifier TMSI, which the home base station uses to search from its memory such values received earlier from the mobile station which relate to the identifier. Thereafter the home base station will authenticate the mobile station by sending to it the RAND number which it has retrieved from the memory. Upon receiving the RAND, the SIM card will perform algorithm X, obtaining the SRES value as result, which the mobile station MS will send to the home base station. The value ought to be the same as the one it has generated earlier in connection with the registration, so the home base station will perform validation by comparing the received SRES value with the one in its memory. If they are identical, the call may be started. For ciphering the information it has sent to the mobile station the base station uses ciphering key Kc which it has stored, and the mobile station uses the same key, which it has also stored earlier, or then it may recalculate the key using algorithm Y, as shown in the figure.

It should be noticed that both the RAND and the SRES values may be sent even several times over the radio interface, whereby a third party may capture them. This is possible also in case of a GSM system. However, this is not a problem, because the ciphering key is not transmitted at all by radio, but only through the fixed connection when the mobile station is attached to the home base station.

Figure 7 shows another embodiment, where the home base station is the active party in authentication.

Registration with the home base station takes place so that the mobile station MS transmits its IMSI (International Mobile Subscriber Identity) or its TMSI (Temporary Mobile Subscriber Identity) to the home base station HBS. In response to this, the home base station will generate a random number RAND and calculate algorithm X using the random number and key Kᵢ, obtaining the answer SRES as result. Using the same initial values but algorithm Y it also performs algorithm Y obtaining a connection-specific ciphering key Kc as result. These algorithms may be the same as those used in the cellular system. All values are stored in the memory.

Hereafter the home base station feeds its generated inquiry RAND, its calculated answer SRES and the key Kc through contact pins 51 to subscriber equipment ME, which will store the information it receives. Registration has now taken place and the authentication and ciphering parameters to be used are now known to the mobile station. The mobile station MS has turned into a cordless phone, it may be removed from home base station HBS and it may originate or receive a fixed network call.

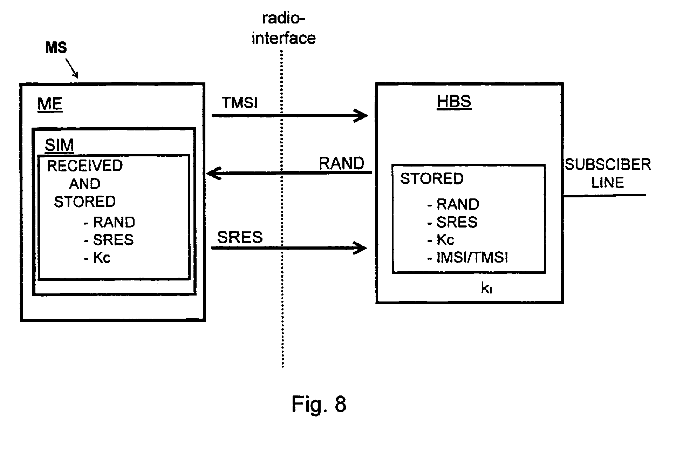

When originating or receiving a call, authentication is first performed and this is explained referring to Figure 8. The mobile station MS first sends by radio to home base station HBS its identifier TMSI, which the home base station uses for finding from its memory any values which relate to the identifier and which have earlier been received from the mobile station. Thereafter the home base station authenticates the mobile station by sending to it the RAND number which it has searched from the memory. Having received the RAND, the SIM card will perform algorithm X obtaining as result the SRES value, which the mobile station MS will send to the home base station. The value ought to be the same as the one which it generated earlier in connection with the registration, so the home base station performs validation by comparing the SRES value which it has received and the one in its memory. If these are the same, the call may be started. For ciphering the information it has sent to the mobile station, the base station uses the ciphering key Kc which it has stored, and the mobile station uses the same key, which it too has stored earlier, or then it may recalculate the key using algorithm Y.

It is also possible to act in such a way that the mobile station authenticates the base station. Hereby it sends to the base station both the IMSI and the RAND, in response to which the base station returns the SRES number. The mobile station checks to make sure that the number corresponds with the already stored or recalculated SRES value.

Arranging functions according to the invention in present cellular network phones will require minor software additions and new algorithms, if required, in addition to the existing ones, such as A3A8 algorithms. Any additions to be made in the home base station are minor ones, if the first embodiment is implemented. The great advantage is that any cellular network phone registered with the home base station will work as a cordless phone. In practice, the phone is a dual-mode phone, whereby the same phone will work at home as a cordless phone at cheaper call tariffs and outside the home as a normal cellular network phone. If registration with the base station takes place automatically, as proposed above, and if registration with the cellular network takes place automatically using earlier parameters stored in the phone memory, the user to change the mode need only connect the phone for a moment to the home base station when coming home, to the office or any other such place.

When the phone registers with the home base station, one must of course make sure that its transmission power will fall considerably below the minimum transmission power determined for the mobile station in the cellular network system so that the range will be reduced to a few hundred meters in free space. This must be done because when operating as a cordless phone the mobile station will not cause interference in such connections of the cellular system which use the same frequency.

It could even be possible to program the phone so that it would be able when registered with the home base station to receive calls both from the fixed network side and from the cellular network side, but outgoing calls would be directed to the fixed network.

The proposed arrangement can be implemented in practice in many different ways keeping within the scope of the claims. Programs and algorithms can be freely chosen as well as the party who will generate the authentication and ciphering information. Registration may preferably be started by pushing the phone into the charging station, but the base station may alternatively have some other place where the phone is placed while registration takes place. Several phones may be registered with the home base station. In-house calls between these phones may be implemented by suitable software in the base station.

## Claims

1. Telephone system comprising terminal equipment and a home base station connected with a subscriber line to a telephone exchange, whereby a part of the subscriber connection is formed by a radio link between the terminal equipment and the base station,
**characterized in that**
the terminal equipment is a mobile station of a cellular mobile telephone system also containing first means for implementing an authentication procedure between itself and the home base station (HBS),
the base station contains second means for implementing an authentication procedure between itself and the mobile station, adapted for
generation and exchange of authentication parameters between the mobile station and the home base station to begin at once when the mobile station is put into the home base station so that a wireline connection is brought about between them, whereby after transmission of authentication parameters the mobile station has turned into a cordless phone registered with the home base station.

2. System as defined in claim 1,
**characterized in that**
the first means comprise a first algorithm (algorithm X), an identification key (Kᵢ) and a random number (RAND) generator,
the second means comprise a memory, adapted for
after putting the mobile station in the home base station the first means will generate a random number (RAND), in response to which the first algorithm (algorithm X) produces an answer (SRES) using identification key (Kᵢ) and the mobile station transmits the random number (RAND), the response (SRES) and its identifier (IMSI/TMSI) to the home base station (HBS) to be stored in the memory.

3. System as defined in claim 2,
**characterized in that**
the first means comprise a second algorithm (algorithm Y) and in response to the random number the first means is adapted to perform a second algorithm (algorithm Y) using the random number and the identification key (Kᵢ) and as result of the second algorithm transmit a connection-specific ciphering key (Kc) to the home base station to be stored in the memory.

4. System as defined in claim 1,
**characterized in that**
the first means comprise a memory,
the second means comprise a first algorithm (algorithm X), an identification key (Kᵢ) and a random number (RAND) generator, adapted for
after putting the mobile station in the home base station, the mobile station transmits its identifier (IMSI/TMSI) to the home base station, in response to which the second means will generate a random number (RAND), in response to which the first algorithm (algorithm X) will produce a response (SRES) using identification key (Kᵢ) and the home base station will transmit the random number (RAND) and the response (SRES) to the mobile station to be stored in the memory.

5. System as defined in claim 4,
**characterized in that**
the second means also comprise a second algorithm (algorithm Y) and in response to the random number (RAND) the second means is adapted to perform a second algorithm (algorithm Y) using the random number and the identification key (Kᵢ) and will as result of the second algorithm transmit a connection-specific ciphering key (Kc) to the mobile station to be stored in the memory.

6. System as defined in claim 2.
**characterized in that** when the mobile station works as a cordless phone separately from the home base station, said system is adapted to perform authentication in formation of the call in such a way that
a) the mobile station sends its identifier (IMSI/TMSI) to the home base station,
b) in response to the identifier the home base station searches the memory for the stored random number (RAND) and sends it to the mobile station, t
c) in response to the random number (RAND) the mobile station searches the memory for the stored response (SRES) and sends it to the home base station,
d) the home base station compares the response which it received with the response it has stored in the memory and accepts the mobile station if the responses are identical.

7. System as defined in claim 4,
**characterized in that** when the mobile station works as a cordless phone separately from the home base station, said system is adapted to perform authentication in formation of the call in such a way that
a) the mobile station sends its identifier (IMSI/TMSI) to the home base station,
b) in response to the identifier the home base station searches the memory for the stored random number (RAND) and sends it to the mobile station,
c) in response to the random number (RAND) the mobile station performs a first algorithm (algorithm X) using the random number and the identification key (Kᵢ) and sends the resulting response (SRES) to the home base station (HBS),
d) the home base station compares the response which it received with the response it has stored in the memory and accepts the mobile station if the responses are identical.

8. System as defined in claim 6 or 7,
**characterized in that** the mobile station is adapted to cipher the information it sends using the connection-specific ciphering key (Kc) which it has stored in the memory, and the home base station is adapted to cipher the information it sends using the connection-specific ciphering key (Kc) which it has stored in the memory.

9. System as defined in claim 1, **characterized in that** when the mobile station is placed in the home base station, it is adapted to deregister automatically from the cellular network.

10. System as defined in claim 1, **characterized in that** when the mobile station is placed in the home base station, it is adapted to deregister automatically from the cellular network but keeps in memory the authentication parameters used in the cellular network, whereby when the mobile station moves beyond the range of the home base station it will automatically attempt access to the cellular network using these parameters.

## Patentansprüche

1. Telefonsystem mit einer Endgerätevorrichtung und einer Heimatbasisstation, die mit einer Teilnehmerleitung zu einer Telefonvermittlung verbunden ist, wobei ein Teil der Teilnehmerverbindung durch eine Funkstrecke zwischen der Endgerätevorrichtung und der Basisstation gebildet wird,
**dadurch gekennzeichnet, dass**
die Endgerätevorrichtung eine Mobilstation eines zellularen Mobiltelefonsystems ist, die außerdem eine erste Einrichtung zum Implementieren eines Authentisierungsvorgangs zwischen sich selbst und der Heimatbasisstation (HBS) enthält,
die Basisstation eine zweite Einrichtung zum Implementieren eines Authentisierungsvorgangs zwischen sich selbst und der Mobilstation enthält, angepasst dafür, dass
eine Erzeugung und ein Austausch von Authentisierungsparametern zwischen der Mobilstation und der Heimatbasisstation alsbald beginnt, wenn die Mobilstation in die Heimatbasisstation gesetzt wird, so dass eine drahtgebundene Verbindung zwischen diesen herbeigeführt wird, wobei die Mobilstation nach Übertragung von Authentisierungsparametern zu einem schnurlosen Telefon geworden ist, das an der Heimatbasisstation registriert ist.

2. System gemäß Anspruch 1,
**dadurch gekennzeichnet, dass**
die erste Einrichtung einen ersten Algorithmus (Algorithmus X), einen Identifikationsschlüssel (Kᵢ) und einen Zufallszahlen- (RAND) Generator aufweist,
die zweite Einrichtung einen Speicher aufweist, dafür angepasst, dass
die erste Einrichtung, nachdem die Mobilstation in die Heimatbasisstation gesetzt ist, eine Zufallszahl (RAND) erzeugen wird, in Erwiderung worauf der erste Algorithmus (Algorithmus X) unter Verwendung eines Identifikationsschlüssels (Kᵢ) eine Antwort (SRES) produziert und die Mobilstation die Zufallszahl (RAND), die Antwort (SRES) und ihre Kennung (IMSI/TMSI) an die Heimatbasisstation (HBS) überträgt, um in dem Speicher gespeichert zu werden.

3. System gemäß Anspruch 2,
**dadurch gekennzeichnet, dass**
die erste Einrichtung einen zweiten Algorithmus (Algorithmus Y) aufweist und die erste Einrichtung angepasst ist, in Erwiderung auf die Zufallszahl einen zweiten Algorithmus (Algorithmus Y) unter Verwendung der Zufallszahl und des Identifikationsschlüssels (Kᵢ) durchzuführen und als Ergebnis des zweiten Algorithmus einen verbindungsspezifischen Verschlüsselungsschlüssel (Kc) an die Heimatbasisstation zu übertragen, um in dem Speicher gespeichert zu werden.

4. System gemäß Anspruch 1,
**dadurch gekennzeichnet, dass**
die erste Einrichtung einen Speicher aufweist,
die zweite Einrichtung einen ersten Algorithmus (Algorithmus X), einen Identifikationsschlüssel (Kᵢ) und einen Zufallszahlen- (RAND) Generator aufweist, dafür angepasst, dass
die Mobilstation, nachdem die Mobilstation in die Heimatbasisstation gesetzt ist, ihre Kennung (IMSI/TMSI) an die Heimatbasisstation überträgt, in Erwiderung worauf die zweite Einrichtung eine Zufallszahl (RAND) erzeugen wird, in Erwiderung worauf der erste Algorithmus (Algorithmus X) unter Verwendung eines Identifikationsschlüssels (Kᵢ) eine Antwort (SRES) produzieren wird und die Heimatbasisstation die Zufallszahl (RAND) und die Antwort (SRES) an die Mobilstation übertragen wird, um in dem Speicher gespeichert zu werden.

5. System gemäß Anspruch 4,
**dadurch gekennzeichnet, dass**
die zweite Einrichtung außerdem einen zweiten Algorithmus (Algorithmus Y) aufweist und die zweite Einrichtung angepasst ist, in Erwiderung auf die Zufallszahl (RAND) einen zweiten Algorithmus (Algorithmus Y) unter Verwendung der Zufallszahl und des Identifikationsschlüssels (Kᵢ) durchzuführen, und als Ergebnis des zweiten Algorithmus einen verbindungsspezifischen Verschlüsselungsschlüssel (Kc) an die Mobilstation übertragen wird, um in dem Speicher gespeichert zu werden.

6. System gemäß Anspruch 2,
**dadurch gekennzeichnet, dass** das System angepasst ist, wenn die Mobilstation getrennt von der Heimatbasisstation als schnurloses Telefon arbeitet, eine Authentisierung bei Einrichtung des Rufs derart durchzuführen, dass
a) die Mobilstation ihre Kennung (IMSI/TMSI) an die Heimatbasisstation sendet,
b) die Heimatbasisstation in Erwiderung auf die Kennung den Speicher nach der gespeicherten Zufallszahl (RAND) durchsucht und diese an die Mobilstation sendet,
c) die Mobilstation in Erwiderung auf die Zufallszahl (RAND) den Speicher nach der gespeicherten Antwort (SRES) durchsucht und diese an die Heimatbasisstation sendet,
d) die Heimatbasisstation die Antwort, die sie empfangen hat, mit der Antwort vergleicht, die sie in dem Speicher gespeichert hat, und die Mobilstation akzeptiert, wenn die Antworten identisch sind.

7. System gemäß Anspruch 4,
**dadurch gekennzeichnet, dass** das System angepasst ist, wenn die Mobilstation getrennt von der Heimatbasisstation als schnurloses Telefon arbeitet, eine Authentisierung bei Einrichtung des Rufs derart durchzuführen, dass:
a) die Mobilstation ihre Kennung (IMSI/TMSI) an die Heimatbasisstation sendet,
b) die Heimatbasisstation in Erwiderung auf die Kennung den Speicher nach der gespeicherten Zufallszahl (RAND) durchsucht und diese an die Mobilstation sendet,
c) die Mobilstation in Erwiderung auf die Zufallszahl (RAND) einen ersten Algorithmus (Algorithmus X) unter Verwendung der Zufallszahl und des Identifikationsschlüssels (Kᵢ) durchführt und die resultierende Antwort (SRES) an die Heimatbasisstation (HBS) sendet,
d) die Heimatbasisstation die Antwort, die sie empfangen hat, mit der Antwort vergleicht, die sie in dem Speicher gespeichert hat, und die Mobilstation akzeptiert, wenn die Antworten identisch sind.

8. System gemäß Anspruch 6 oder 7,
**dadurch gekennzeichnet, dass** die Mobilstation angepasst ist zum Verschlüsseln der Informationen, die sie sendet, unter Verwendung des verbindungsspezifischen Verschlüsselungsschlüssels (Kc), den sie in dem Speicher gespeichert hat, und die Heimatbasisstation angepasst ist zum Verschlüsseln der Informationen, die sie sendet, unter Verwendung des verbindungsspezifischen Verschlüsselungsschlüssels (Kc), den sie in dem Speicher gespeichert hat.

9. System gemäß Anspruch 1, **dadurch gekennzeichnet, dass** die Mobilstation, wenn sie in der Heimatbasisstation platziert ist, angepasst ist zum automatischen Deregistrieren von dem zellularen Netzwerk.

10. System gemäß Anspruch 1, **dadurch gekennzeichnet, dass** die Mobilstation, wenn sie in der Heimatbasisstation platziert ist, angepasst ist zum automatischen Deregistrieren von dem zellularen Netzwerk, aber die in dem zellularen Netzwerk verwendeten Authentisierungsparameter gespeichert hält, wobei die Mobilstation, wenn sie sich über den Bereich der Heimatbasisstation hinaus bewegt, automatisch einen Zugang zu dem zellularen Netzwerk unter Verwendung dieser Parameter versuchen wird.

## Revendications

1. Système téléphonique comprenant un équipement terminal et une station de base locale connectée au moyen d'une ligne d'abonné à un central téléphonique, moyennant quoi une partie de la connexion d'abonné est formée par une liaison radio entre l'équipement terminal et la station de base,
**caractérisé en ce que**
l'équipement terminal est une station mobile d'un système téléphonique cellulaire mobile contenant également des premiers moyens destinés à mettre en oeuvre une procédure d'authentification entre eux-mêmes et la station de base locale (HBS),
la station de base contient des seconds moyens destinés à mettre en oeuvre une procédure d'authentification entre elle-même et la station mobile, adaptés pour que
la génération et l'échange de paramètres d'authentification entre la station mobile et la station de base locale commencent immédiatement lorsque la station mobile est placée dans la station de base locale de façon à entraîner une connexion câblée entre elles, moyennant quoi, après une transmission des paramètres d'authentification, la station mobile est devenue un téléphone sans fil enregistré avec la station de base locale.

2. Système selon la revendication 1,
**caractérisé en ce que**
les premiers moyens comprennent un premier algorithme (algorithme X), une clé d'identification (Kᵢ) et un générateur de nombres aléatoires (RAND),
les seconds moyens comprennent une mémoire adaptée pour que
une fois que la station mobile est placée dans la station de base locale, les premiers moyens génèrent un nombre aléatoire (RAND), en réponse auquel le premier algorithme (algorithme X) produit une réponse (SRES) en utilisant la clé d'identification (Kᵢ) et la station mobile transmet le nombre aléatoire (RAND), la réponse (SRES) et son identifiant (IMSI/TMSI) à la station de base locale (HBS) pour qu'ils soient stockés dans la mémoire.

3. Système selon la revendication 2,
**caractérisé en ce que**
les premiers moyens comprennent un second algorithme (algorithme Y) et en réponse au nombre aléatoire, les premiers moyens sont adaptés pour exécuter un second algorithme (algorithme Y) en utilisant le nombre aléatoire et la clé d'identification (Kᵢ) et en résultat du second algorithme, transmettre une clé de chiffrement spécifique à la connexion (Kc) à la station de base locale pour qu'elle soit stockée dans la mémoire.

4. Système selon la revendication 1,
**caractérisé en ce que**
les premiers moyens comprennent une mémoire,
les seconds moyens comprennent un premier algorithme (algorithme X), une clé d'identification (Kᵢ) et un générateur de nombres aléatoires (RAND), adaptés pour que
une fois que la station mobile est placée dans la station de base locale, la station mobile transmet son identifiant (IMSI/TMSI) à la station de base locale, en réponse auquel les seconds moyens génèrent un nombre aléatoire (RAND), en réponse auquel le premier algorithme (algorithme X) produit une réponse (SRES) en utilisant une clé d'identification (Kᵢ) et la station de base locale transmet le nombre aléatoire (RAND) et la réponse (SRES) à la station mobile pour qu'ils soient stockés dans la mémoire.

5. Système selon la revendication 4,
**caractérisé en ce que**
les seconds moyens comprennent également un second algorithme (algorithme Y) et en réponse au nombre aléatoire (RAND), les seconds moyens sont adaptés pour exécuter un second algorithme (algorithme Y) en utilisant le nombre aléatoire et la clé d'identification (Kᵢ) et en résultat du second algorithme, transmettre une clé de chiffrement spécifique à la connexion (Kc) à la station mobile pour qu'elle soit stockée dans la mémoire.

6. Système selon la revendication 2,
**caractérisé en ce que** lorsque la station mobile fonctionne comme téléphone sans fil séparément de la station de base locale, ledit système est adapté pour exécuter l'authentification lors de la formation de l'appel d'une manière telle que
a) la station mobile envoie son identifiant (IMSI/TMSI) à la station de base locale,
b) en réponse à l'identifiant, la station de base locale cherche dans la mémoire le nombre aléatoire (RAND) stocké et l'envoie à la station mobile,
c) en réponse au nombre aléatoire (RAND), la station mobile cherche dans la mémoire la réponse (SRES) stockée et l'envoie à la station de base locale,
d) la station de base locale compare la réponse qu'elle a reçue à la réponse qu'elle a stockée dans la mémoire et accepte la station mobile si les réponses sont identiques.

7. Système selon la revendication 4,
**caractérisé en ce que** lorsque la station mobile fonctionne comme téléphone sans fil séparément de la station de base locale, ledit système est adapté pour exécuter l'authentification lors de la formation de l'appel d'une manière telle que
a) la station mobile envoie son identifiant (IMSI/TMSI) à la station de base locale,
b) en réponse à l'identifiant, la station de base locale cherche dans la mémoire le nombre aléatoire (RAND) stocké et l'envoie à la station mobile,
c) en réponse au nombre aléatoire (RAND), la station mobile exécute un premier algorithme (algorithme X) en utilisant le nombre aléatoire et la clé d'identification (Kᵢ) et envoie la réponse résultante (SRES) à la station de base locale (HBS),
d) la station de base locale compare la réponse qu'elle a reçue à la réponse qu'elle a stockée dans la mémoire et accepte la station mobile si les réponses sont identiques.

8. Système selon la revendication 6 ou 7,
**caractérisé en ce que** la station mobile est adaptée pour chiffrer l'information qu'elle envoie en utilisant la clé de chiffrement spécifique à la connexion (Kc) qu'elle a stockée dans la mémoire, et la station de base locale est adaptée pour chiffrer l'information qu'elle envoie en utilisant la clé de chiffrement spécifique à la connexion (Kc) qu'elle a stockée dans la mémoire.

9. Système selon la revendication 1, **caractérisé en ce que** lorsque la station mobile est placée dans la station de base locale, elle est adaptée pour se radier automatiquement du réseau cellulaire.

10. Système selon la revendication 1, **caractérisé en ce que** lorsque la station mobile est placée dans la station de base locale, elle est adaptée pour se radier automatiquement du réseau cellulaire mais elle garde en mémoire les paramètres d'authentification utilisés dans le réseau cellulaire, moyennant quoi, lorsque la station mobile se déplace au-delà de la portée de la station de base locale, elle tente automatiquement d'accéder au réseau cellulaire en utilisant ces paramètres.
